# EUROPÄISCHE PATENTSCHRIFT

(11) **EP 2 706 038 B1**
(45) Veröffentlichungstag und Bekanntmachung des Hinweises auf die Patenterteilung: **25.05.2016**
(21) Anmeldenummer: 13181752.0
(22) Anmeldetag: 27.08.2013
(51) Int. Cl.: B66F 9/075

(54) **Flurförderzeug mit synchronem Reluktanzmotor**
Industrial truck with synchronous reluctance motor
Chariot de manutention avec moteur à reluctance synchrone

(30) Priorität: 10.09.2012 DE 102012108410
(43) Veröffentlichungstag der Anmeldung: 12.03.2014
(73) Patentinhaber: Linde Material Handling GmbH, 63743 Aschaffenburg (DE)
(72) Erfinder: Weiner, Christian, 63785 Obernburg (DE); Sippel, Heiko, 63741 Aschaffenburg (DE); Herrmann, Udo, 63867 Johannesberg (DE)
(74) Vertreter: Geirhos, Johann

(56) Entgegenhaltungen:
- EP-A1- 0 800 951
- EP-A2- 0 881 743
- EP-A2- 1 964 752
- WO-A1-98/22960
- CN-U- 201 975 970
- DE-A1- 10 215 128
- DE-A1-102011 055 519
- JP-A- 2011 131 777
- JP-A- 2012 090 447
- US-A1- 2009 236 930
- US-A1- 2009 250 279
- US-A1- 2010 123 426

## Beschreibung

Die Erfindung betrifft ein Flurförderzeug mit zumindest einem Elektromotor. Insbesondere betrifft die Erfindung ein Flurförderzeug mit zumindest einem Elektromotor für den Fahrantrieb und/oder als Antrieb einer Vorrichtung, insbesondere einer Arbeitshydraulik oder einer Lenkung.

In dem Stand der Technik sind sogenannte synchrone Reluktanzmaschinen bekannt, die eine dreiphasige Drehfeldmaschine für den 4-Quadranten Betrieb darstellen, wobei diese als Motor oder Generator sowie jeweils in beiden Drehrichtungen ausgeführt und betrieben werden können.

Bei diesen synchronen Reluktanzmaschinen sind die Ständerwicklungen im Beispielsfall eines dreiphasigen Motors, vergleichbar einem Asynchronmotor, jeweils um 120° elektrisch versetzt angeordnete Phasenwicklungen jeweils für eine der drei Phasen.

Durch eine spezielle Formgebung des Läufers oder Rotors mit ausgeprägten Polen wird diesem eine starke bevorzugte Ausrichtung zum magnetischen Feld eingeprägt. Die Drehbewegung wird durch ein rotierendes magnetisches Feld erzeugt, dem der Rotor zu folgen versucht. Im Gegensatz zu Asynchronmaschinen oder durch Permanentmagnete erregten Synchronmaschinen, bei denen das Drehmoment durch die Wechselwirkung eines Magnetfelds mit einem durch einen Leiter fließenden Strom bzw. die Wechselwirkung mit den Permanentmagneten erzeugt wird, erfolgt die Drehmomenterzeugung in einer Reluktanzmaschine aufgrund der auf einen weichmagnetischen Stoff eines Rotors in einem Magnetfeld wirkenden Maxwellschen Kraft durch die das magnetische System den Zustand des geringsten magnetischen Widerstands oder Reluktanz anstrebt. Die Bewegung kommt durch das Ausrichten des Rotors an einem durch die Ständerspulen bzw. Statorwicklungen erzeugten Magnetfeld zustande, wobei durch einen geeigneten dreiphasigen Umrichter und die induktive Kopplung der Ständerspulen ein sich drehendes Magnetfeld erzeugt wird. Hierzu muss der Rotor eine bevorzugte Ausrichtung innerhalb des Magnetfelds und somit Pole aufweisen.

Insbesondere bei batterie-elektrisch betriebenen Flurförderzeugen werden als elektrische Antriebsmotoren für den Fahrantrieb, den Lenkantrieb, aber auch zum Antrieb von Arbeitsvorrichtungen, wie etwa für den Antrieb einer Pumpe einer Arbeitshydraulik Elektromotoren eingesetzt. Hierfür können die beschriebenen, synchronen Reluktanzmaschinen eingesetzt werden.

Aufgrund der guten elektrischen Leitfähigkeit sind die Phasenwicklungen der synchronen Reluktanzmaschine üblicherweise in Kupferdraht ausgeführt. Nachteilig an diesem Stand der Technik ist, dass durch das Material Kupfer hohe Kosten entstehen.

Der vorliegenden Erfindung liegt die Aufgabe zugrunde, ein Flurförderzeug mit Elektromotor als synchroner Reluktanzmaschine zur Verfügung zu stellen, das kostengünstig herzustellen ist.

Diese Aufgabe wird durch ein Flurförderzeug mit den Merkmalen des Patentanspruchs 1 gelöst. Vorteilhafte Weiterbildungen der Erfindung werden in den Unteransprüchen angegeben.

Aus der US 2010/0123426 A1 und der WO 98/22960 A1 sind Reluktanzmaschinen bekannt. US 2009/250279A offenbart einen Flurförderzeug gemäß dem Oberbegriff des Anspruchs 1.

Die Aufgabe wird durch ein Flurförderzeug mit den Merkmalen des Patentanspruchs 1 gelöst.

Vorteilhaft lassen sich dadurch erhebliche Kosten einsparen. Aufgrund der Abhängigkeit der elektrischen Leitfähigkeit von dem Leitungsdurchmesser und damit vom Volumen ergibt sich noch ein erheblich größerer Vorteil für Aluminium gegenüber Kupfer als nur bei Betrachtung eines geringeren Materialpreises. Aluminium hat eine erheblich geringere Dichte von weniger als einem Drittel der Dichte von Kupfer. Gleichzeitig ist zurzeit der Materialpreis von Aluminium pro Gewicht gegenüber Kupfer um den Faktor zwei bis drei geringer. Diese beiden Effekte kombinieren sich und führen zu einem um einen Faktor sieben bis zehn geringeren Materialpreis.

In einer Weiterbildung ist die Vorrichtung eine Arbeitshydraulik, die durch eine Hydraulikpumpe mit Druckmittel versorgt wird, wobei die Hydraulikpumpe von dem Elektromotor angetrieben wird.

Die Arbeitshydraulik kann eine Hubvorrichtung für Lasten, insbesondere ein Hubgerüst mit höhenbeweglich geführtem Lastaufnahmemittel umfassen. Weiterhin kann die Arbeitshydraulik einen gegebenenfalls vorhandenen Neigeantrieb für das Hubgerüst und einen gegebenenfalls vorhandenen Zusatzantrieb, beispielsweise einer Seitenschiebereinrichtung für ein Lastaufnahmemittel umfassen.

Die Vorrichtung kann eine Lenkhydraulik sein, die durch eine Hydraulikpumpe mit Druckmittel versorgt wird, wobei die Hydraulikpumpe von dem Elektromotor angetrieben wird. Hierbei kann es sich um die Hydraulikpumpe der Arbeitshydraulik handeln.

Die Vorrichtung kann ebenfalls als elektrische Lenkung ausgebildet sein, wobei der elektrische Lenkmotor als synchrone Reluktanzmaschine ausgebildet ist.

Die Phasenwicklungen sind als Stäbe oder als Schienen ausgeführt.

In einer Ausführungsform der Erfindung besteht nur ein Teil der Phasenwicklungen aus Aluminium.

Durch eine Kombination, bei der nur ein Teil der Phasenwicklungen aus Aluminium gebildet ist und eventuell die verbleibenden Phasenwicklungen aus einem anderen Material oder wie herkömmliche aus Kupfer bestehen, kann dadurch gegebenenfalls eine Optimierung zwischen Baugröße, Kosten und Wirkungsgrad erreicht werden. Vorteilhaft besteht eine Phasenwicklung von insgesamt drei Phasenwicklungen aus Aluminium.

Es können zwei Phasenwicklungen von insgesamt drei Phasenwicklungen aus Aluminium bestehen.

Weitere Vorteile und Einzelheiten der Erfindung werden anhand des in den schematischen Figuren dargestellten Ausführungsbeispiels näher erläutert. Hierbei zeigen
- Fig. 1a: schematisch ein Ausführungsbeispiel eines Rotors eines Elektromotors im Querschnitt, der bei dem erfindungsgemäßen Flurförderzeug zum Einsatz kommen,
- Fig. 1b: schematisch ein weiteres Ausführungsbeispiel eines Rotors des Elektromotors im Querschnitt, der bei dem erfindungsgemäßen Flurförderzeug zum Einsatz kommt,
- Fig. 1c: schematisch ein drittes Ausführungsbeispiel eines Rotors des Elektromotors im Querschnitt, der bei dem erfindungsgemäßen Flurförderzeug zum Einsatz kommt,
- Fig. 2: ein Ausführungsbeispiel eines erfindungsgemäßen Flurförderzeugs und
- Fig. 3: schematisch eine Antriebseinheit mit Lenkantrieb des erfindungsgemäßen Flurförderzeugs der Fig. 2.

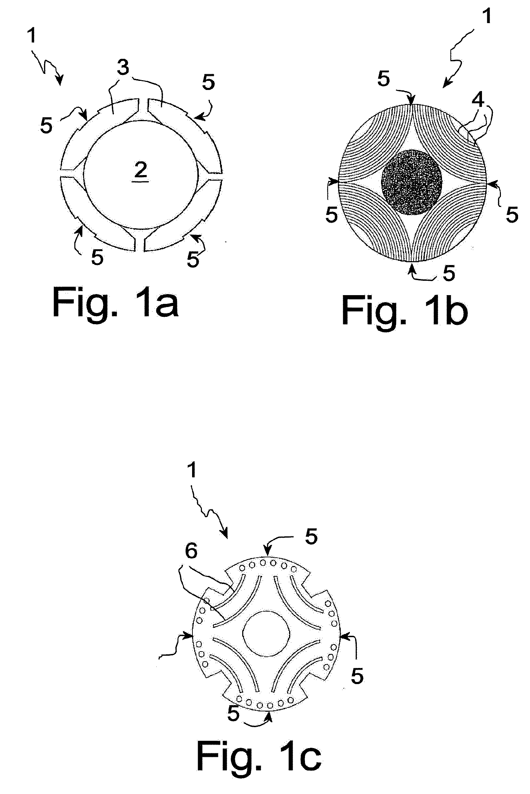

Die Fig. 1 a zeigt schematisch ein Ausführungsbeispiel eines Rotors 1 eines als synchrone Reluktanzmaschine ausgebildeten Elektromotors, der bei einem erfindungsgemäßen Flurförderzeug zum Einsatz kommt. Durch den Elektromotor kann ein elektrischer Fahrantrieb angetrieben werden, aber auch jede andere Vorrichtung, wie etwa eine Arbeitshydraulik oder ein Lenkantrieb. Der Rotor 1 besteht aus einer Rotorwelle 2 sowie vier Segmenten 3 aus weichmagnetischem oder einem geeigneten hochpermeablen Material, die am Umfang angeordnet und jeweils unter Ausbildung eines Luftspalts untereinander beanstandet sind. Die Segmente 3 bilden in Umfangsrichtung betrachtet in ihrem jeweils mittleren Bereich Pole 5, die beim Anliegen eines äußeren Magnetfelds sich mit dem Magnetfeld auszurichten suchen, da in der Orientierung der Pole 5 die kleinste magnetische Reluktanz vorliegt. Wird durch Statorwicklungen ein äußeres Drehfeld erzeugt, so wird der Rotor 1 von dem Magnetfeld mitgenommen. Die vier Pole 5 sind in zwei sich rechtwinklig schneidenden Achsen angeordnet.

Die Fig. 1b zeigt schematisch ein weiteres Ausführungsbeispiel eines Rotors 1 einer synchronen Reluktanzmaschine im Querschnitt, der bei dem erfindungsgemäßen Flurförderzeug zum Einsatz kommt. Einander entsprechende Bauteile sind wie auch in den folgenden Zeichnungen mit gleichen Bezugsziffern versehen. Der Rotor 1 besteht hier aus mehreren übereinandergelegten und aneinander befestigten, beispielsweise verklebten, Blechen 4. Durch dieses "Laminieren" der Bleche 4 wird eine bevorzugte Ausrichtung der entstehenden Blechpakete mit dem Magnetfeld in der Ebene der Bleche 4 erreicht. Werden die Bleche, wie in Fig. 1b dargestellt, in vier Viertelkreisen angeordnet, so bilden sich vier Pole 5 an den Stellen, an denen die laminierten Bleche 4 den Außenradius des Rotors 1 schneiden.

Die Fig. 1c zeigt schematisch ein drittes Ausführungsbeispiel eines Rotors 1 einer synchronen Reluktanzmaschine im Querschnitt, der bei dem erfindungsgemäßen Flurförderzeug zum Einsatz kommt. Bei diesem Ausführungsbeispiel weist der Rotor 1 im Querschnitt betrachtet Flusssperren-Schnitte 6 auf. Diese Flusssperren-Schnitte 6 bilden Barrieren für den magnetischen Fluss und führen dazu, dass sich wiederum Pole 5 bilden.

Die Phasenwicklungen (Ständer- bzw. Statorwicklungen) aller drei als Ausführungsbeispiele beschriebenen synchronen Reluktanzmaschinen sind in Aluminium ausgeführt.

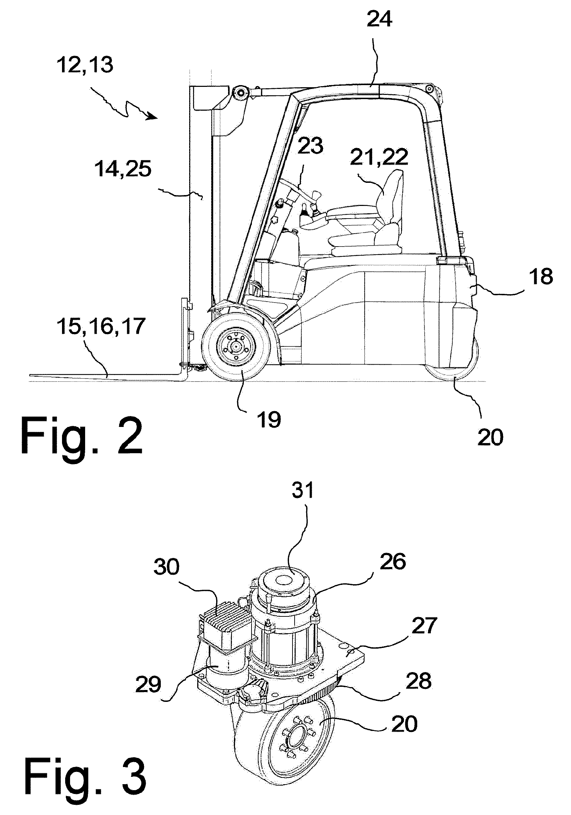

Die Fig. 2 zeigt ein Ausführungsbeispiel eines erfindungsgemäßen Flurförderzeugs 12 in Seitenansicht. Das dargestellte Flurförderzeug ist beispielsweise als elektrisch über eine nicht dargestellte Traktionsbatterie betriebener Gegengewichtsgabelstapler 13 ausgebildet.

Der Gegengewichtsgabelstapler 13 weist frontseitig eine als Hubgerüst 25 ausgebildete vordere Hubvorrichtung 14 mit einem an dieser höhenbeweglich geführten Lastaufnahmemittel 15 auf, beispielsweise einer aus zwei Gabelzinken 16 bestehenden Lastgabel 17. Ein auf dem Lastaufnahmemittel 15 aufliegendes Lastgewicht wird durch ein heckseitiges hinteres Gegengewicht 18 ausgeglichen.

Der in dem vorliegenden Beispiel beispielsweise batterie-elektrisch angetriebene Gegengewichtsgabelstapler 13 weist eine Vorderachse mit zwei Vorderrädern 19 auf, die als nicht angetriebene Räder oder gemäß einer alternativen Ausführungsform als Antriebsräder ausgebildet sein können. Das im dargestellten Ausführungsbeispiel als Dreiradstapler ausgebildete Flurförderzeug 12 wird über ein einzelnes gelenktes Rad 20 gesteuert.

In der hier als Beispiel gezeigten Alternative, in der die Vorderräder 19 als nicht angetriebene Räder ausgebildet sind, ist das gelenkte Rad 20 als Antriebsrad ausgeführt. Der Gegengewichtsgabelstapler 13 kann alternativ mit einem verbrennungsmotorischen Antriebssystem versehen sein und/oder als Vierradstapler, bei dem beispielsweise zwei gelenkte Hinterräder gesteuert werden.

Ein Fahrerplatz 21 des Flurförderzeugs 12 ist mit einem Fahrersitz 22 versehen. Der Fahrersitz 22 und weitere Bedienelemente, beispielsweise ein Lenkrad 23, befinden sich unter einem Fahrerschutzdach 24.

Unterhalb des Fahrersitzes 22 befindet sich bei dem batterie-elektrisch angetriebenen Gegengewichtsgabelstapler 13 eine Traktionsbatterie und wäre bei einem verbrennungsmotorisch angetriebenen Gegengewichtsgabelstapler ein Verbrennungsmotor angeordnet.

Durch die zuvor in drei Ausführungsvarianten beschriebenen synchronen Reluktanzmaschinen wird dabei eine Hydraulikpumpe angetrieben, die eine Arbeitshydraulik mit Druckmittel versorgt, das zum Beispiel über Hydraulikzylinder eine Hubbewegung des Lastaufnahmemittels 15 ermöglicht. Weitere Verbraucher der Arbeitshydraulik können von einem einen oder mehrere Neigezylinder umfassenden Neigeantrieb des Hubgerüstes 25 und einem oder mehrerer gegebenenfalls vorhandenen Zusatzantrieben gebildet werden, beispielsweise einer Seitenschiebereinrichtung des Lastaufnahmemittels 15.

Die Fig. 3 zeigt schematisch eine elektrische Antriebseinheit mit einem elektrischen Lenkantrieb des erfindungsgemäßen Flurförderzeugs 12 der Fig. 2. Das gelenkte Rad 20 kann über ein Getriebe durch einen als synchrone Reluktanzmaschine ausgeführten Elektromotor 26 als elektrischer Fahrantrieb angetrieben werden, wir er zuvor in Bezug auf die Figur 1a bis Fig. 1c beschrieben wurde. Eine elektronische Steuereinheit 31 mit Umrichter ist mit dem Elektromotor 26 verbunden. Dadurch ist die elektronische Steuereinheit 31 mit dem Elektromotor 26 zu einer Baueinheit integriert. Diese kann jedoch auch getrennt von dem Elektromotor 26 angeordnet werden.

Bei der Antriebseinheit ist das Hinterrad 20 um eine Hochachse zur Einstellung eines Lenkwinkels in einer Trägerplatte 27 drehbar gelagert und über einen Zahnkranz 28 kann ein weiterer als synchrone Reluktanzmaschine ausgeführter Elektromotor 29 gemäß den Fig. 1a bis Fig. 1c als elektrischer Lenkmotor den Einschlagswinkel des Rades 20 einstellen. Eine elektronische Steuereinheit 30 mit Umrichter ist mit dem Elektromotor 29 verbunden. Dadurch ist die elektronische Steuereinheit 30 mit dem Elektromotor 29 zu einer Baueinheit integriert. Diese kann jedoch auch getrennt von dem Elektromotor 29 angeordnet werden.

Alternativ kann der Fahrantrieb über die beiden Vorderräder 19 erfolgen, wobei zum Antrieb der beiden als Antriebsräder ausgebildeten Vorderräder 19 ein Einzelradantrieb mit einem elektrischen Antriebsmotor für jedes Antriebsrad oder ein beide Räder über ein Differentialgetriebe antreibender einzelner elektrischer Antriebsmotor vorgesehen werden. Der bzw. die elektrischen Fahrmotoren können ebenfalls als synchrone Reluktanzmaschinen gemäß den Figuren 1a bis 1c ausgeführt sein.

Die Erfindung ist nicht beschränkt auf Gegengewichtsgabelstapler. Vielmehr kann jegliche Art von Flurförderzeugen mit Elektromotoren gemäß der Erfindung ausgestattet werden. Es können etwa auch Lagertechnikgeräte mit elektrischer Lenkung mit einem solchen Elektromotor als Lenkmotor und/oder Fahrantriebsmotor versehen werden, wie beispielsweise Hubwagen, Kommissionierer, Schlepper, Plattformwagen, Schubstapler, Schubmaststapler und Regalstapler.

## Patentansprüche

1. Flurförderzeug mit zumindest einem Elektromotor (26,29) für den Fahrantrieb und/oder als Antrieb einer Vorrichtung, wobei der Elektromotor (26,29) eine synchrone Reluktanzmaschine ist,
**dadurch gekennzeichnet,**
**dass** Phasenwicklungen der synchronen Reluktanzmaschine aus Aluminium bestehen sowie als Stäbe oder Schienen ausgeführt sind.

2. Flurförderzeugs nach Anspruch 1,
**dadurch gekennzeichnet,**
**dass** die Vorrichtung eine Arbeitshydraulik ist, die durch eine Hydraulikpumpe mit Druckmittel versorgt wird, wobei die Hydraulikpumpe von dem Elektromotor angetrieben wird.

3. Flurförderzeug nach Anspruch 1 oder 2,
**dadurch gekennzeichnet,**
**dass** die Vorrichtung ein elektrische Lenkung ist.

4. Flurförderzeug nach einem der Ansprüche 1 bis 3,
**dadurch gekennzeichnet,**
**dass** nur ein Teil der Phasenwicklungen aus Aluminium besteht.

5. Flurtörderzeug nach Anspruch 4,
**dadurch gekennzeichnet,**
**dass** eine Phasenwicklung von insgesamt drei Phasenwicklungen aus Aluminium besteht.

6. Flurförderzeug nach Anspruch 4,
**dadurch gekennzeichnet,**
**dass** zwei Phasenwicklungen von insgesamt drei Phasenwicklungen aus Aluminium bestehen.

## Claims

1. Industrial truck having at least one electric motor (26, 29) for the traction drive and/or as a drive of an apparatus, wherein the electric motor (26, 29) is a synchronous reluctance machine, **characterized in that** phase windings of the synchronous reluctance machine are composed of aluminium and also are designed in the form of bars or rails.

2. Industrial truck according to Claim 1, **characterized in that** the apparatus is a working hydraulics system which is supplied with a pressure medium by a hydraulic pump, wherein the hydraulic pump is driven by the electric motor.

3. Industrial truck according to Claim 1 or 2, **characterized in that** the apparatus is an electric steering arrangement.

4. Industrial truck according to one of Claims 1 to 3, **characterized in that** only some of the phase windings are composed of aluminium.

5. Industrial truck according to Claim 4, **characterized in that** one phase winding from amongst a total of three phase windings is composed of aluminium.

6. Industrial truck according to Claim 4, **characterized in that** two phase windings from amongst a total of three phase windings are composed of aluminium.

## Revendications

1. Chariot de manutention comprenant au moins un moteur électrique (26, 29) pour l'entraînement de conduite et/ou en tant qu'entraînement d'un dispositif, le moteur électrique (26, 29) étant une machine à reluctance synchrone,
**caractérisé en ce que**
des enroulements de phase de la machine à reluctance synchrone se composent d'aluminium et sont réalisés sous forme de barres ou de rails.

2. Chariot de manutention selon la revendication 1,
**caractérisé en ce que**
le dispositif est un système hydraulique de travail qui est alimenté en fluide sous pression par une pompe hydraulique, la pompe hydraulique étant entraînée par le moteur électrique.

3. Chariot de manutention selon la revendication 1 ou 2,
**caractérisé en ce que**
le dispositif est une direction électrique.

4. Chariot de manutention selon l'une quelconque des revendications 1 à 3,
**caractérisé en ce que**
seulement une partie des enroulements de phase se compose d'aluminium.

5. Chariot de manutention selon la revendication 4,
**caractérisé en ce que**
un enroulement de phase sur un total de trois enroulements de phase se compose d'aluminium.

6. Chariot de manutention selon la revendication 4,
**caractérisé en ce que**
deux enroulements de phase sur un total de trois enroulements de phase se composent d'aluminium.
